# FASCICULE DE BREVET EUROPEEN

(11) **EP 3 312 616 B1**
(45) Date de publication et mention de la délivrance du brevet: **26.04.2023**
(21) Numéro de dépôt: 17197070.0
(22) Date de dépôt: 18.10.2017
(51) Int. Cl.: G01Q 60/38, G01Q 70/10

(54) **SONDE POUR MICROSCOPIE A FORCE ATOMIQUE MINIATURISEE ET A FAIBLE ENCOMBREMENT**
MINIATURISIERTE SONDE FÜR RASTERKRAFTMIKROSKOPIE MIT GERINGEM PLATZBEDARF
MINIATURISED, COMPACT ATOMIC FORCE MICROSCOPY PROBE

(30) Priorité: 21.10.2016 FR 1660215
(43) Date de publication de la demande: 25.04.2018
(73) Titulaire: Vmicro, 59652 Villeneuve d'Ascq (FR); CENTRE NATIONAL DE LA RECHERCHE SCIENTIFIQUE, 75016 Paris (FR); Université de Lille 1 Sciences et Technologies, 59655 Villeneuve d'Ascq (FR)
(72) Inventeur: WALTER, Benjamin, 59000 Lille (FR); FAUCHER, Marc, 59810 Lesquin (FR); MAIRIAUX-MAGE, Estelle, 59000 Lille (FR)
(74) Mandataire: Atout PI Laplace

(56) Documents cités:
- WO-A1-2016/138398
- US-A1- 2014 338 074
- AN TOSHU ET AL: "Atomically-resolved imaging by frequency-modulation atomic force microscopy using a quartz length-extension resonator", APPLIED PHYSICS LETTERS, A I P PUBLISHING LLC, US, vol. 87, no. 13, 22 septembre 2005 (2005-09-22), pages 133114-133114, XP012075821, ISSN: 0003-6951, DOI: 10.1063/1.2061850
- Clemens Mueller-Falcke ET AL: "Switchable stiffness scanning microscope probe", , 1 janvier 2005 (2005-01-01), XP055273841, Extrait de l'Internet: URL:http://dspace.mit.edu/bitstream/handle /1721.1/32349/61493511-MIT.pdf?sequence=2 [extrait le 2016-05-20]

## Description

L'invention porte sur une sonde pour microscopie à force atomique et sur un microscope à force atomique comprenant au moins une telle sonde.

La microscopie à force atomique (ou "AFM " pour « Atomic Force Microscopy » en anglais) est une technique de microscopie à balayage développée à partir des années quatre-vingt et permettant d'atteindre une résolution à l'échelle atomique. Contrairement à la microscopie à balayage à effet tunnel, la microscopie à force atomique n'est pas limitée à la formation d'images de surfaces conductrices, ce qui la rend adaptée à des matériaux isolants, semi-conducteurs, voire même à des échantillons de nature biologique. Cette technique trouve application dans de nombreux domaines de la recherche pure et appliquée, mais également dans l'industrie microélectronique. Une introduction générale aux principes de l'AFM est fournie par l'article de F. J. Giessibl et C. F. Quate " Exploring the nanoworld with atomic force microscopy", Physics Today, décembre 2006, pages 44 - 50.

Le composant essentiel d'un microscope à force atomique conventionnel est une sonde constituée par un levier encastré à une extrémité et pourvu, à l'extrémité opposée, d'une pointe orientée vers la surface de l'échantillon à observer. Le levier présente généralement une longueur de l'ordre de quelques dizaines ou centaines de micromètres, et la pointe un rayon de courbure de quelques dizaines ou centaines de nanomètres. Une telle sonde, généralement constituée de silicium monocristallin ou de nitrure de silicium, peut être fabriquée par des techniques photolithographiques conventionnelles, à un coût faible. Lorsque la pointe de la sonde est rapprochée d'une surface, elle subit l'influence de forces attractives ou répulsives de nature chimique, de van der Waals, électrostatiques et/ou magnétiques. En mesurant ces forces pendant que la pointe balaye la surface de l'échantillon à observer, il est possible de reconstituer une image de ce dernier. La mesure des forces s'exerçant entre la pointe et l'échantillon peut s'effectuer de différentes manières. Selon la technique la plus simple et plus ancienne (AFM statique) on se limite à observer, notamment par des moyens optiques, la déflexion du levier encastré supportant la pointe.

Une meilleure sensibilité peut être obtenue en faisant vibrer ce levier selon l'un de ses modes propres de flexion, et en observant les variations de fréquence de résonance induites par les gradients de ces forces (AFM dynamique). En pratique, la technique dynamique est généralement préférée pour les observations effectuées dans le vide ou dans l'air. Cette technique convient moins bien aux observations en milieu liquide, car les vibrations du levier y sont fortement amorties ce qui dégrade le facteur de qualité de la sonde.

Une autre technique d'imagerie consiste à approcher la pointe de la surface, puis à la rétracter. Lors de la phase d'approche, la pointe rentre en contact avec la surface, et le levier encastré qui la porte fléchit ; lors de la phase de retrait, elle adhère à la surface pendant un certain temps, et le levier fléchit donc dans le sens inverse. L'amplitude du mouvement étant connue, une mesure de la déformation du levier au cours du temps permet de déterminer la topographie de l'échantillon et ses propriétés mécaniques locales point par point. Cette technique, dite d'imagerie par courbes de force, est connue par exemple du document US2012/0131702. Elle est non-résonante ; ainsi, le déplacement de la sonde doit s'effectuer à une fréquence bien plus faible que celle du mode fondamental de vibration du levier. Cela limite la vitesse d'acquisition des images.

Il est également connu d'utiliser des sondes d'AFM exploitant des modes de vibration planaires - on parle aussi de « mouvement vertical » - qui permettent d'atteindre des facteurs de qualités très élevés même en AFM dynamique dans des milieux visqueux.

Par exemple, l'article de Toshu An et al. « Atomically-resolved imaging by frequency-modulation atomic force microscopy using a quartz length-extension resonator», Applied Physics Letters 87, 133114 (2005) décrit une sonde pour AFM comprenant un résonateur micromécanique formé par une poutre en quartz, maintenue en son milieu par un cadre rigide également en en quartz, qui vibre selon un mode extensionnel. Une pointe AFM est collée à une extrémité de cette poutre, alignée avec son axe longitudinal. Ce résonateur présente un facteur de qualité élevé, mais aussi une rigidité importante qui limite fortement l'amplitude des vibrations (typiquement inférieure à 1 nm ou tout au plus de quelques nanomètres). En outre, la sonde n'est pas réalisée de manière monolithique, ce qui limite sa miniaturisation.

La société suisse SPECS GmbH commercialise une sonde AFM « KolibriSensor » basé sur ce principe.

La demande internationale WO 2008/148951 décrit une sonde AFM monolithique utilisant un résonateur en forme d'anneau ou de disque qui oscille selon un mode de volume (déformation dans le plan). Une telle sonde permet d'atteindre des fréquences élevées, ce qui est favorable à l'obtention d'un facteur de qualité élevé même lorsqu'elle est utilisée dans un milieu visqueux. En plus, elle présente une moindre raideur que celle décrite par Toshu An et al., et se prête à une miniaturisation plus poussée car elle peut être réalisée de façon monolithique. Toutefois, l'équilibrage des masses fixées au résonateur - essentiel pour garantir la présence d'un mode à facteur de qualité élevé - est délicat.

Dans sa thèse « Fabrication de micro-résonateurs haute fréquence pour la microscopie à force atomique sur des objets biologiques », soutenue à l'Université de Sciences et Technologie de Lille le 13 décembre 2011, B. Walter (un des présents inventeurs) a décrit une sonde AFM comprenant une pointe fixée à la région médiane d'une poutre flexible qui présente deux ou quatre encastrements, situés de part et d'autre de la pointe. Cette dernière est orientée suivant une direction perpendiculaire à l'axe longitudinal de la poutre. La réalisation d'une telle sonde est délicate car la masse de la pointe perturbe ses modes ; en outre elle est sensible à la position des ancrages, qui doit être choisie avant qu'il soit possible de caractériser la pointe.

Dans sa thèse « Switchable Stiffness Scanning Microscope Probe », soutenue à la Technische Universität Darmstad en juin 2005, Clemens T. Mueller-Falcke décrit une sonde pour AFM verticale à raideur ajustable. Dans cette sonde, la pointe AFM est portée par une poutre longitudinale, qui est reliée à un cadre par un ressort en épingle et un résonateur mécanique en anneau ; le cadre est à son tour relié à un ancrage par des ressorts en épingle. Un actionneur électrostatique est prévu entre l'ancrage et le substrat.

Malgré leurs différences structurelles, les sondes AFM exploitant des modes de vibration planaires connues de l'art antérieur partagent un certain nombre d'inconvénients, en particulier leur encombrement. Ces contraintes d'encombrement sont liées au fait que la pointe AFM dépasse relativement peu du substrat planaire sur lequel est réalisée la sonde. En d'autres termes, la pointe s'étend du bord dudit substrat sur une distance qui est très faible par rapport à la largeur du substrat (sa plus grande dimension perpendiculaire à la pointe), mais aussi à son épaisseur (sa plus petite dimension perpendiculaire à la pointe). A cause de cela, la pointe doit être maintenue sensiblement perpendiculaire à la surface de l'échantillon observé par AFM, qui doit être planaire et lisse : toute inclinaison supérieure à quelques degrés, ou toute irrégularité de la surface supérieure à quelques micromètres, conduirait à un contact indésirable entre le substrat de la sonde et l'échantillon. Cela limite très fortement les possibilités d'étudier des échantillons biologiques (qui ne sont généralement pas lisses) et d'effectuer simultanément des analyses ou observations optiques et par AFM d'une même région d'un échantillon.

De prime abord, on pourrait envisager d'atténuer ces contraintes d'encombrement en utilisant des pointes AFM plus longues, ou formées à l'extrémité libre de poutres longues et fines. Cela pose néanmoins des difficultés considérables. En effet, une pointe AFM ou poutre montée en porte-à-faux et s'étendant sur une longueur relativement importante (dix fois sa largeur, voire plus ; typiquement cela correspond à quelques dizaines ou centaines de micromètres) présente des modes parasites de flexion susceptibles d'être activés involontairement et de perturber le fonctionnement normal de la poutre. En outre, dans le cas d'une sonde du type décrit dans WO 2008/148951, une pointe trop longue - et donc lourde - perturberait les modes de déformation elliptique du résonateur en anneau.

Dans le cas de l'article précité de Toshu An et al., la pointe est fixée à l'extrémité d'une poutre de longueur considérable (supérieure à 1 mm). Toutefois, afin d'empêcher l'excitation des modes de flexion et de faciliter le collage de la pointe rapportée, cette poutre présente une section droite relativement importante, avec des dimensions de l'ordre de 100 µm alors que la pointe AFM ne dépasse de la poutre que d'une dizaine de micromètres environ. C'est donc la poutre longitudinale portant la pointe, plus que le cadre qui supporte cette poutre, qui introduit des contraintes d'encombrement qui demeurent relativement sévères.

Le document WO 2016/138398 divulgue une sonde AFM comprenant une pluralité de pointes portées par des poutres longitudinales supportées par des éléments de soutien qui s'étendent au-delà du bord du substrat. Ces poutres sont épaisses, ce qui limite leur fréquence de résonance mécanique.

L'invention vise à remédier aux inconvénients précités de l'art antérieur. Plus particulièrement, elle vise à procurer une sonde AFM à mouvement vertical présentant un faible encombrement et des bonnes propriétés mécaniques - c'est-à-dire un déplacement planaire dans une direction bien définie, peu affecté par des modes parasites dans le plan ou hors du plan. Avantageusement, une sonde AFM selon l'invention doit présenter une fréquence de résonance dans le plan élevée (supérieure ou égale à 1 MHz) et une amplitude de déplacement de la pointe pouvant être comprise entre un et cent nanomètres environ. Selon différents modes de réalisation, elle doit pouvoir être utilisée selon une modalité résonante ou non-résonante, et notamment en imagerie par courbes de force. Dans ce dernier cas, l'invention vise aussi à permettre de donner à la pointe un déplacement moyen pouvant atteindre plusieurs micromètres, tout en combinant une cadence d'acquisition d'images plus élevée que selon l'art antérieur.

Pour obtenir une fréquence de résonance (et donc une cadence d'acquisition d'images) élevée sans avoir en même temps une raideur trop importante - et donc une trop faible amplitude de déplacement de la pointe - les éléments mobiles de la sonde, incluant la pointe, doivent présenter une masse aussi réduite que possible. Cela peut être obtenu en réalisant ces éléments à partir d'un matériau en couche mince, présentant une épaisseur de quelques centaines de nanomètres seulement. Une telle approche pose cependant des difficultés, car une partie mobile d'épaisseur aussi faible présente nécessairement une flexibilité élevée. Pour éviter des modes de déformation parasites, en particulier des flexions hors du plan, il faudrait donc que cette partie ne dépasse du bord du substrat que de quelques micromètres au plus. Cela n'est pas acceptable pour au moins deux raisons :
- Premièrement, la gravure du substrat présente une tolérance de plusieurs micromètres, ce qui fait que la position du bord n'est pas précisément définie. A trop vouloir miniaturiser la sonde, on s'expose donc au risque que la pointe ne dépasse pas du bord du substrat, ce qui serait incompatible avec son fonctionnement.
- Deuxièmement, les contraintes d'encombrement seraient très importantes.

L'invention permet de surmonter ces obstacles grâce à l'utilisation d'une structure mécanique de soutien ancrée au substrat, s'étendant au-delà du bord du substrat et supportant la partie sensible de la sonde sans pour autant la bloquer. La partie sensible de la sonde peut donc être très mince, car c'est la structure de soutien qui lui apporte la stabilité mécanique nécessaire. De cette façon, il est possible d'optimiser de manière indépendante la fréquence de résonance (qui dépend uniquement de la structure de la partie sensible, et notamment de sa masse) et la rigidité mécanique face aux flexions hors du plan (qui dépend essentiellement de la structure de soutien) ; on évite également les modes de résonance parasites. Selon un mode de réalisation particulier de l'invention, la structure mécanique de soutien est agencée « par-dessus » la partie sensible de la sonde, c'est-à-dire du côté opposé au substrat.

Un objet de l'invention est donc une sonde pour microscopie à force atomique selon la revendication 1.

Un autre objet de l'invention est un microscope à force atomique selon la revendication 16 comprenant au moins une telle sonde. Il peut avantageusement être configuré pour opérer en modalité d'imagerie par courbes de force.

D'autres caractéristiques, détails et avantages de l'invention ressortiront à la lecture de la description faite en référence aux dessins annexés donnés à titre d'exemple et qui représentent, respectivement :
- La figure 1A, une vue en plan d'une sonde selon un premier mode de réalisation de l'invention ;
- Les figures 1B et 1C, deux vues de détail montrant des régions d'ancrage de la sonde de la figure 1A ;
- La figure 1D, une vue de détail latérale de la sonde de la figure 1A ;
- La figure 1E, une vue en perspective de la sonde de la figure 1A ;
- La figure 1F, une vue de détail en perspective d'une partie de la sonde de la figure 1A ;
- Les figures 1G à 1I, des vues analogues à celles des figures 1B - D mais correspondant à une variante du premier mode de réalisation de l'invention ;
- La figure 2, une vue en plan d'une sonde selon un deuxième mode de réalisation de l'invention ;
- La figure 3, une vue en plan d'une sonde selon un troisième mode de réalisation de l'invention ;
- La figure 4, une vue en plan d'une sonde selon un quatrième mode de réalisation de l'invention ;
- La figure 5, une vue en plan d'une sonde selon un cinquième mode de réalisation de l'invention ;
- La figure 6, une vue en plan d'une sonde selon un sixième mode de réalisation de l'invention ;
- La figure 7, une vue en plan d'une sonde selon un septième mode de réalisation de l'invention ;
- La figure 8, une vue en plan d'une sonde selon un huitième mode de réalisation de l'invention ;
- Les figures 9a et 9b, une vue en plan de deux sondes selon deux variantes respectives d'un neuvième mode de réalisation de l'invention ; et
- La figure 10, une vue en plan d'une sonde selon un mode de réalisation qui n'est pas couvert par les revendications.

Dans les différentes figures, les mêmes références désignent des éléments identiques, ou au moins fonctionnellement équivalents.

Une sonde selon l'invention peut par exemple être fabriquée à partir d'une structure de type SOI (silicium sur isolant), comprenant :
- Un substrat en silicium (référence SU dans les figures), en général épais de 20 µm à 1 mm, de préférence entre 50 et 600 µm ;
- Une couche enterrée d'oxyde SiO₂ (référence BOX), généralement d'une épaisseur comprise entre 0,1 µm et 5 µm, de préférence entre 0,2 µm et 2 µm; et
- une couche mince de silicium appelée « couche de dispositif » (« Device Layer » en anglais) dont l'épaisseur peut en principe atteindre quelques micromètres, mais dans le cas de l'invention ne dépasse généralement pas les 500 nm, voire les 200 nm.

Conformément à un mode de réalisation de l'invention une couche additionnelle, par exemple en silicium polycristallin (polysilicium), est déposée au-dessus de la couche de dispositif. Cette couche présente une épaisseur supérieure d'au moins un facteur 2, et de préférence d'au moins un facteur 5 voire un facteur 10, à celle de la couche de dispositif. Le choix du polysilicium est opportun pour des raisons technologiques, car il est facile de déposer une couche de silicium polycristallin au-dessus d'une couche de dispositif en silicium monocristallin, mais n'est pas exclusif.

La couche additionnelle, plus épaisse donc plus rigide, sert à la réalisation de la structure de soutien, tandis que la partie sensible de la sonde, comprenant la pointe d'AFM, sont réalisées à partir de la couche de dispositif, moins massive. L'oxyde enterré permet d'ancrer la sonde au substrat.

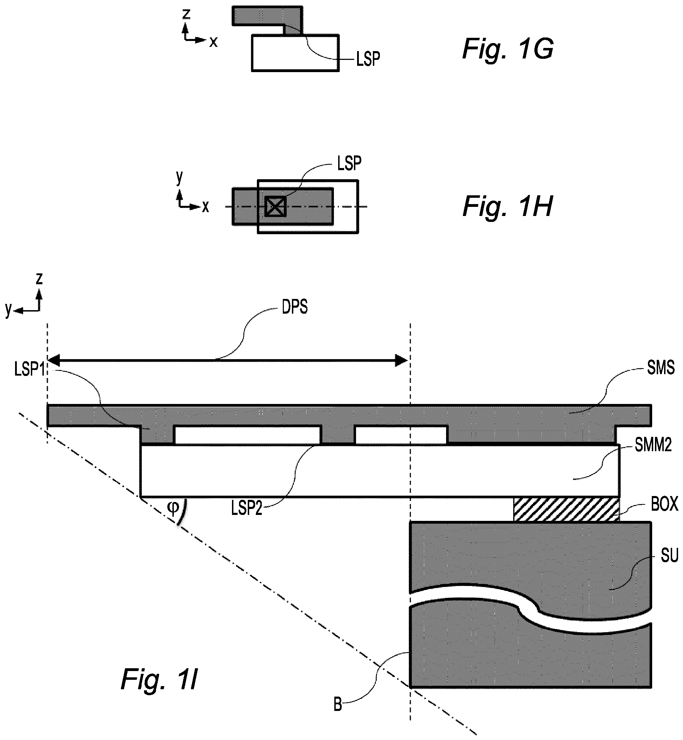

L'utilisation d'une couche additionnelle en polysilicium déposée sur un substrat SOI constitue une solution préférée car elle permet d'utiliser des technologies éprouvées, mais de nombreuses alternatives sont possibles. Par exemple, la couche de dispositif peut être réalisée en un matériau autre que le silicium, tel que du SiN. Il est également possible de réaliser certaines parties de la sonde dans la couche de dispositif d'un substrat SOI et d'autres dans un matériau comme Si₃N₄ ou tout autre matériau ayant des propriétés mécaniques convenables. De même, la couche additionnelle ne doit pas nécessairement être en polysilicium. Dans tous ces cas, il s'agit de réaliser un empilement formé d'un substrat, d'une première couche mince destinée à réaliser la partie sensible de la sonde et d'une seconde couche, plus épaisse, destinée à former la structure de soutien. Comme cela sera expliqué plus en détail en référence aux figures 1G - 1I, il est également possible d'inverser l'ordre des deux couches, c'est-à-dire d'agencer la seconde couche (couche épaisse de soutien) entre le substrat et la première couche (couche mince « active »).

Dans la suite, pour simplifier l'exposé, on considérera uniquement le cas d'une sonde réalisée sur un substrat SOI sur lequel est déposée une couche additionnelle en polysilicium. La généralisation ne pose pas de difficulté particulière.

Dans les figures, la seconde couche est représentée en blanc, la première couche (par exemple, couche de dispositif) en gris, les métallisation sont hachurées et une ligne pointillée délimite les régions d'oxyde enterré qui subsistent pour ancrer la sonde au substrat. Le substrat est également représenté en blanc, cela n'étant pas source de confusion.

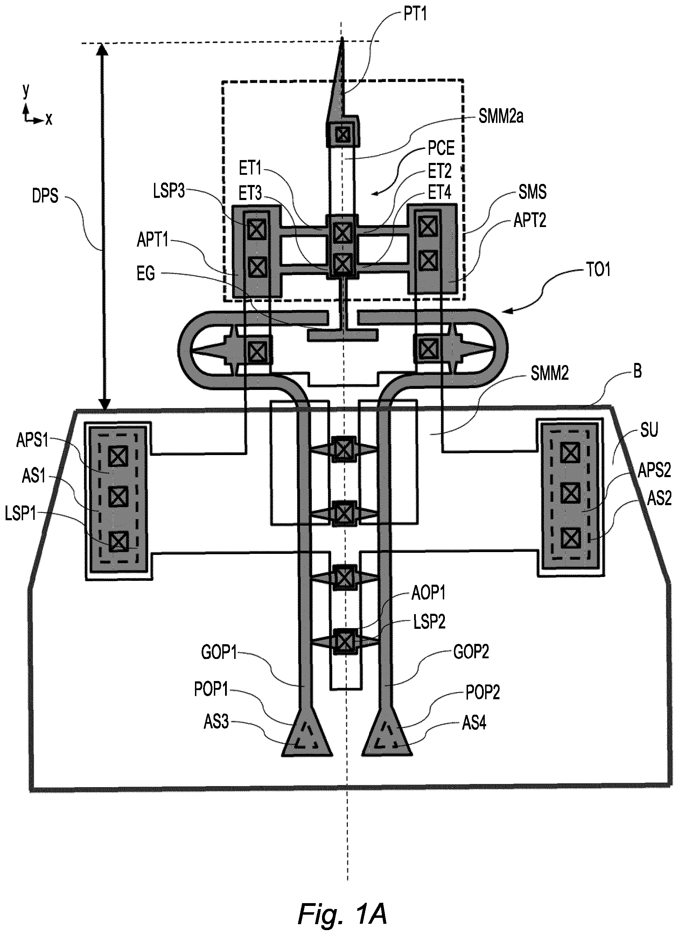

La figure 1A est une vue en plan d'une sonde selon un premier mode de réalisation de l'invention. Cette sonde est de type passif, au sens où elle n'intègre pas d'actionneur, mais seulement un transducteur optique (référence TO1) permettant de détecter les mouvements de la pointe PT1. Dans la figure 1A - comme dans toutes les autres figures - les éléments obtenus à partir de la couche de dispositif sont représentés en gris. Les liaisons entre ces éléments et la structure de soutien obtenue à partir de la couche additionnelle sont représentés par des croix encadrées par des carrés, et les ancrages au substrat par des contours en trait pointillé. Une ligne noire épaisse représente le contour du substrat SU.

Dans la sonde de la figure 1A, la pointe PT1 est portée par une navette PCE en forme de poutre orientée selon une direction y, dite longitudinale, perpendiculaire au bord B du substrat SU. La navette PCE est reliée à la structure de soutien SMM2 par des éléments flexibles en forme de poutre ET1, ET2, ET3, ET4 s'étendant - ou s'étendant principalement - dans une direction x, dite transversale, perpendiculaire à la direction y précitée, et parallèle au bord B du substrat. La flexion des éléments ET1 - ET4 permet à la navette d'effectuer un mouvement de va-et-vient dans la direction longitudinale y, parallèlement à la surface principale du substrat, qui est parallèle au plan xy, conformément au principe de l'AFM à mouvement vertical.

Dans sa partie arrière - opposée à la pointe PT1 - la navette PCE présente un élément transversal EG formant un guide optique planaire. Deux guides d'ondes planaires GOP1 et GOP2 sont agencés de part et d'autre de cet élément. Ces guides d'onde présentent des extrémités orientés dans la direction transversale et se faisant face. Leurs parties terminales sont parallèles à l'élément transversal de la navette et séparés de ce dernier, dans la direction longitudinale, par un intervalle dont la largeur est comprise entre quelques nanomètres et quelques centaines de nanomètres. Cet agencement est tel que les deux guides d'onde sont couplés, par ondes évanescentes, à l'élément transversal EG de la navette. Ainsi, un rayonnement lumineux se propageant dans un guide se couple dans l'élément transversal et, à travers ce dernier, parvient à l'autre guide. L'intensité du couplage dépend fortement de la largeur de l'intervalle qui sépare les guides d'ondes de l'élément EG dans la direction longitudinale. L'ensemble constitue ainsi un transducteur optique TO1, permettant une mesure précise de la position de la navette dans la direction longitudinale.

Les guides d'onde GOP1, GOP2 s'étendent dans la direction longitudinale, à l'opposé de la direction de la pointe, au dessus du substrat. Elles se terminent par des ports optiques POP1, POP2 permettant l'injection de lumière.

Dans le cas d'une réalisation de la sonde à partir d'un substrat SOI, les guides d'onde peuvent être réalisées dans la couche de dispositif en silicium, à la condition que le rayonnement lumineux utilisé soit infrarouge. Il est également possible d'utiliser des guides d'onde en oxyde de silicium ou en un autre matériau diélectrique transparent déposé au-dessus d'une structure porteuse en silicium.

La navette PCE s'étend au-delà du bord B du substrat dans la direction longitudinale ; de préférence, comme dans le cas de la figure 1A, elle est entièrement agencée au-delà de ce bord, afin de minimiser les contraintes d'encombrement de la sonde ; on désigne par DPS la longueur de dépassement de la pointe par rapport au bord B du substrat ; cette longueur de dépassement est typiquement comprise entre 10 µm et 300 µm, et de préférence entre 100 µm et 300 µm. Cela est rendu possible par la présence de la structure de soutien SMM2 qui présente deux bras s'étendant dans la direction longitudinale, agencés de part et d'autre de la navette. Comme cela a été expliqué plus haut, cette structure de soutien est obtenue à partir d'une couche additionnelle en polysilicium, déposée au-dessus de la couche de dispositif dans laquelle est définie la navette (autrement dit, du côté de cette couche opposé au substrat). La navette est reliée à la structure SMM2 par l'intermédiaire de deux portions d'ancrage APT1, APT2 agencées aux extrémités des éléments transversaux ET1, ET3 (pour APT1) et ET2, ET4 (pour APT2). Dans le mode de réalisation de la figure 1A, la navette n'est pas entièrement réalisée à partir de la première couche (couche de dispositif, par exemple) mais comprend une partie SMM2a, en forme de poutre longitudinale, obtenue à partir de la seconde couche formant également la structure de soutien. Cela est optionnel, mais présente l'avantage de réduire le risque d'une déflexion selon z, non appropriée en AFM.

La navette PCE, y comprise sa partie SMM2a, les portions d'ancrage APT1, APT2 et les éléments transversaux ET1, ET2, ET3, ET4, ainsi que l'élément transversal EG, forment la partie sensible SMS de la sonde. De manière conventionnelle, dans la suite on considérera la pointe PT1 comme étant distincte de ladite navette PCE, bien que dans certains modes de réalisation ces deux éléments puissent être réalisés de manière monolithique.

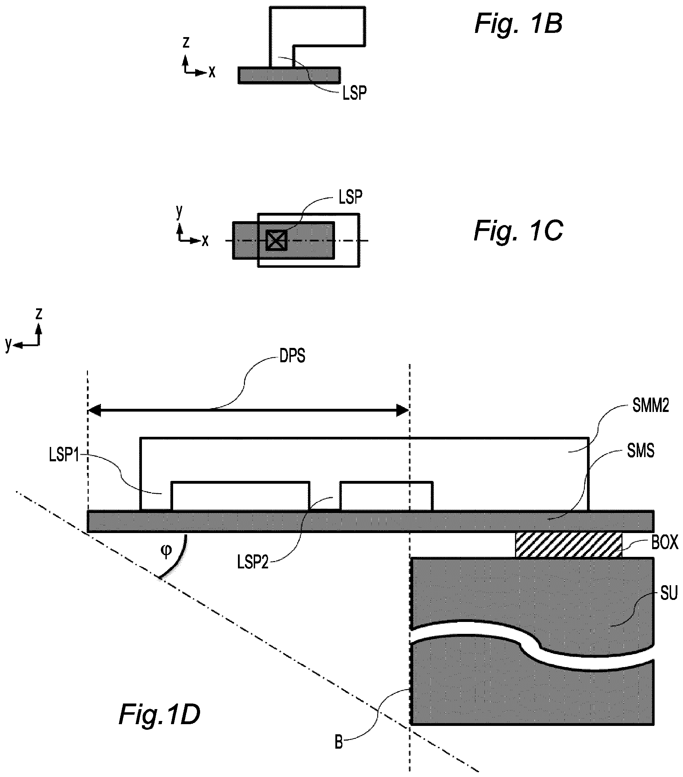

Les portions d'ancrage APT1, APT2 sont reliées à la structure de soutien SMM2 par des liaisons LSP3, représentées sur la figure par des croix encadrées par des carrés. Des liaisons similaires, désignés par la référence LSP2, relient les guides d'onde GOP1, GOP2, qui présentent elles aussi des portions d'ancrage AOP1, à la structure SMM2. Les figures 1B et 1C montrent des vues de détail, en coupe et en plan, de ces liaisons - désignées ici de manière générale par la référence LSP. On peut voir que la structure SMM2 est planaire et présente, en correspondance des liaisons LSP, des protubérances s'étendant vers le substrat (orientation négative de la direction z, perpendiculaire au plan xy) jusqu'à atteindre la couche de dispositif dans laquelle sont réalisés l'ensemble SMS, le capteur TO1 et les guides d'onde GOP1, GOP2.

La structure SMM2 est à son tour ancrée au substrat SU par l'intermédiaire de la couche de dispositif. Plus précisément, la couche de dispositif présente des portions d'ancrage APS1, APS2 qui sont reliées d'une part au substrat par des portions résiduelles AS1, AS2 de la couche d'oxyde enterré (représentées par un contour pointillé) et d'autre part à la structure SMM2 par des liaisons LSP du type décrit plus haut (référence LSP1). Cela apparait plus clairement sur la figure 1D qui montre une vue en coupe longitudinale de la sonde (non à l'échelle) ; dans cette figure, la référence BOX désigne une portion résiduelle de l'oxyde enterré du substrat SOI, constituant les ancrages AS1, AS2. En variante, la structure SMM2 peut être directement ancrée au substrat par l'intermédiaire d'une ouverture pratiquée dans la couche SMS.

Les guides d'onde GOP1, GOP2 sont également ancrées au substrat, au niveau des ports optiques POP1, POP2, par l'intermédiaire de l'oxyde enterré. Les ancrages sont désignés par les références AS3, AS4.

L'angle ϕ, visible sur la figure 1D, représente les contraintes d'encombrement de la sonde perpendiculairement au plan du substrat. Idéalement, il doit être aussi petit que possible, ce qui est obtenu en maximisant la longueur de dépassement DPS. A son tour, cela est rendu possible par la présence de la structure SMM2 qui soutient et rigidifie la navette, sans pour autant l'alourdir. Si on considère la cas d'un substrat de 400 µm d'épaisseur avec DSP=200 µm on obtient ϕ=63°.

Pour diminuer ultérieurement l'angle ϕ il est également possible d'amincir le substrat SU par gravure de sa face arrière.

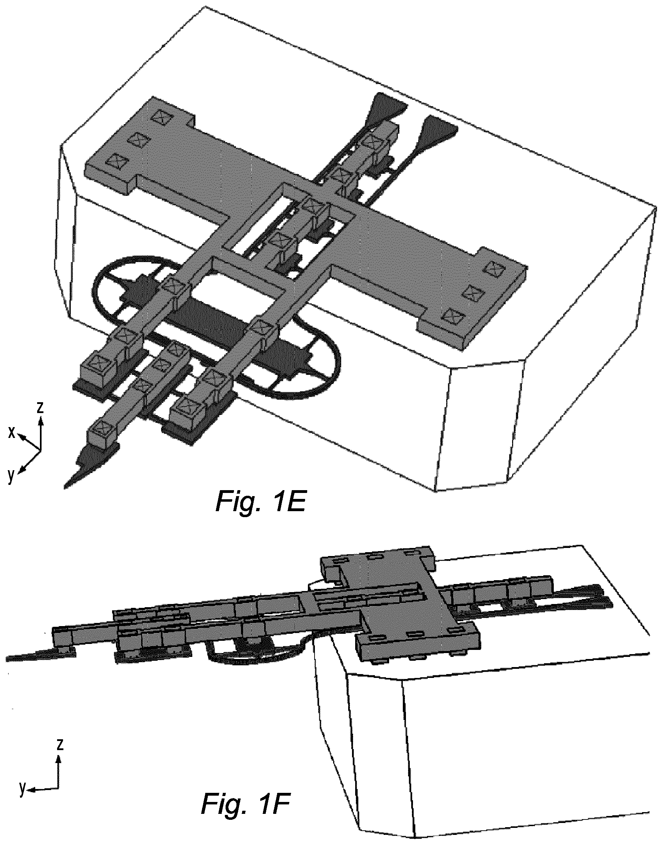

Les figures 1E et 1F, qui sont à l'échelle, permettent d'apprécier de manière plus exacte la structure d'une sonde selon ce premier mode de réalisation de l'invention.

Une sonde selon l'invention peut être fabriquée par des procédés technologiques tout à fait conventionnels, décrit par exemple dans la thèse précitée de B. Walter. Typiquement, les composants de la sonde (poutres, résonateurs...) sont définis dans la couche de dispositif par gravure anisotrope. De manière schématique, on peut procéder de la manière suivante :
- La pointe PT1, les portions d'ancrage APT1, APT2, les éléments transversaux ET1, ET2, ET3, ET4 et l'élément transversal EG de la navette, ainsi que les guides d'onde GOP1, GOP2, sont réalisés par gravure anisotrope de la couche de dispositif DL d'un substrat SOI.
- Une couche sacrificielle, par exemple en oxyde de silicium, est déposée par-dessus.
- Des ouvertures sont pratiquées dans la couche sacrificielle en correspondance des liaisons LSP.
- Une couche en polysilicium est déposée par-dessus-la couche sacrificielle (le polysilicium pénètre dans les ouvertures de manière à former les liaisons LSP.
- La structure de soutien et l'élément SMM2a sont réalisés par gravure anisotrope de cette couche en polysilicium.
- La couche sacrificielle et le BOX sont éliminés par gravure isotrope (cependant, le BOX subsiste au niveau des ancrages, cf. la figure 1D).

Comme cela a été expliqué plus haut, une gravure du substrat par sa face arrière peut également être prévue, pour l'amincir afin de réduire les contraintes d'encombrement. La pointe PT1, avec un rayon de courbure de l'ordre de 10 nm, peut être obtenue en exposant, par une étape de gravure appropriée, des plans cristallins de la couche de dispositif.

Il a été évoqué plus haut que l'ordre de dépôt des couches pourrait être inversée, auquel cas la structure de soutien serait agencée entre la couche « de dispositif » et le substrat. Les figures 1G, 1H et 1I, à rapprocher des figures 1B, 1C et 1D déjà décrites, ce rapportent à cette variante. Cette inversion dans l'ordre des couches est mentionnée en relation à la structure de la figure 1A, mais peut également être envisagée pour les autres modes de réalisation de l'invention.

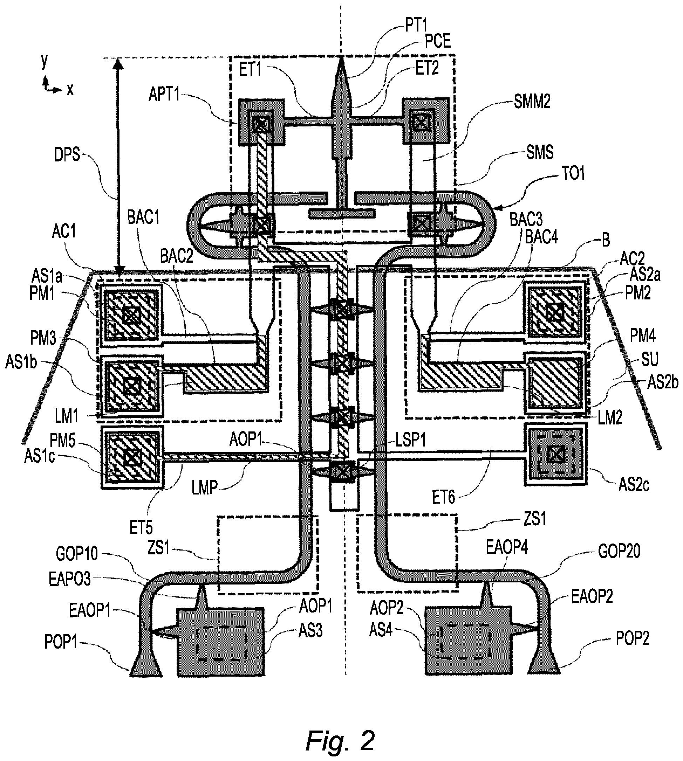

La figure 2 illustre une sonde selon un deuxième mode de réalisation de l'invention. Elle se différencie de celle décrite plus haut essentiellement en ce que la structure de soutien SMM2 peut à son tour se déplacer dans la direction longitudinale y par rapport au substrat, et cela de manière active grâce à des actionneurs de type thermique AC1, AC2. Ce déplacement entraine l'ensemble SMS, et donc la pointe PT1. En outre, comme dans le premier mode de réalisation, la navette PCE demeure libre de se déplacer (de manière passive) dans la direction y par rapport à la structure de soutien, et cela avec une fréquence plus élevée en raison de sa masse moindre.

La mobilité de la structure SMM2 est obtenue grâce à l'utilisation d'éléments transversaux flexibles BAC1, BAC2, ET5 (sur la gauche de la figure) et BAC3, BAC4, ET6 (sur sa droite) pour relier ladite structure aux portions d'ancrage au substrat AS1a, AS1b, AS1c (gauche) AS2a, AS2b, AS2c (droite). Les éléments BAC1, BAC2 forment un actionneur thermique AC1. Des plots de contact métalliques PM1, PM3 sont déposés sur les portions d'ancrage AS1a, AS1b. L'élément BAC2, dit « bras froid », est plus large de BAC1 (« bras chaud ») et recouvert d'une piste métallique LM1 reliée au plot de contact PM3 ; le bras chaud BAC1, réalisé en silicium dopé, présente une résistivité relativement élevé. Lorsqu'une différence de potentiel est appliquée aux plots PM1, PM3, un courant circule dans les éléments BAC1 et BAC2. Une dissipation de puissance (effet Joule) se produit principalement dans l'élément BAC1, plus résistif. La dilatation thermique qui en résulte induit une augmentation de sa longueur, tandis que celle du bras froid BAC2 demeure inchangée. Cette dilatation thermique différentielle induit une flexion des deux éléments transversaux de l'actionneur. Sur la partie droite de la sonde, l'actionneur AC2, constitué par le bras chaud BAC3, le bras froid BAC4 avec la piste métallique LM2 et les plots de contact PM2, PM4, fonctionne exactement de la même façon.

Les éléments transversaux ET5, ET7 sont passifs, et ont uniquement une fonction de soutien et de guidage du déplacement longitudinal de la structure SMM2. En outre, l'élément ET5 porte une piste métallique LMP reliant un plot de connexion PM5 déposé sur la portion d'ancrage AS1C à la structure SMS, rendue partiellement conductrice par dopage, afin de maintenir la pointe PT1 à un potentiel électrique voulu.

Il est important que les guides d'onde GOP10, GOP20, dont la fonction est équivalente à celle des guides GOP1 et GOP2 de la figure 1A, ne gênent pas le mouvement de la structure SMM2 dans la direction longitudinale. Pour cela, elles présentent des coudes définissant des régions flexibles ZS1, ZS2. En outre, elles sont reliées aux portions d'ancrage respectives AS3, AS4 par l'intermédiaire d'éléments d'ancrage EAOP1, EAOP2, EAOP3, EAOP4 en forme de pointe, modélisables par des liaisons pivots.

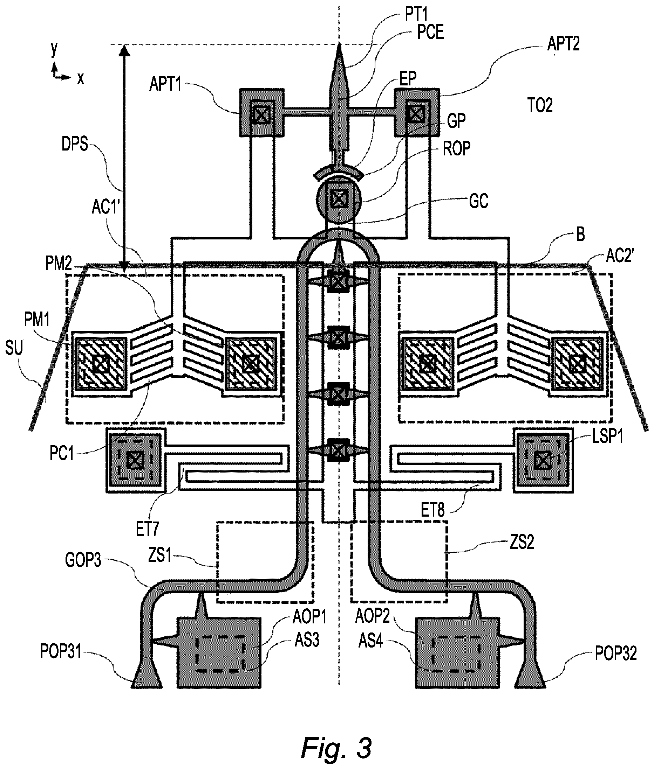

La figure 3 illustre une sonde selon un troisième mode de réalisation de l'invention. Comme dans le deuxième mode de réalisation, la structure de soutien SMM2 est mobile dans la direction longitudinale, mais les actionneurs AC1', AC2' permettant ce mouvement sont de type différent. Il s'agit en effet d'actionneurs thermiques en chevron. Dans le cas de l'actionneur AC1', sur la gauche de la figure, une différence de potentiel est appliquée entre les plots de connexion PM1, PM2 déposés sur des ancrages ; un courant électrique circule donc dans des bras résistifs PC1 en forme de chevron dont la pointe est orienté dans la direction positive de la direction longitudinale (c'est-à-dire dans la direction de la pointe PT1). Ces bras chauffent par effet Joule et se dilatent, ce qui induit un déplacement longitudinal. L'actionneur AC2', sur la droite de la figure, présente le même fonctionnement. Deux éléments transversaux flexibles ET7, ET8 en forme d'épingle contribuent au maintien de la structure PMM2 et guident son déplacement dans la direction longitudinale.

La sonde de la figure 3 comprend un capteur optique de déplacement de la navette TO2 d'un type différent de celui utilisé dans le premier et le deuxième mode de réalisation de l'invention. Ce capteur comprend un guide optique planaire unique GOP3 en forme de « U » présentant à ses extrémités des ports optiques POP31, POP32 permettant l'injection et l'extraction d'un rayonnement lumineux. La partie centrale courbée du guide GOP3 s'étend au-delà du bord B du substrat et est couplée par onde évanescente, à travers un intervalle GC, avec un résonateur optique en forme de disque ROP. L'extrémité arrière de la navette PCE porte un élément EP en forme d'arc de cercle, agencé à proximité du résonateur ROP et séparé de ce dernier par un intervalle GP, situé à l'opposé de l'intervalle GC. La largeur de l'intervalle GP dépend de la position longitudinale de la navette ; en tout cas, elle est suffisamment faible pour que l'élément EP soit couplé par onde évanescente au résonateur ROP. Ainsi, l'élément EP introduit une perturbation de la fréquence de résonance du résonateur, dont l'importance dépend de la largeur de l'intervalle GP et donc de la position de la navette.

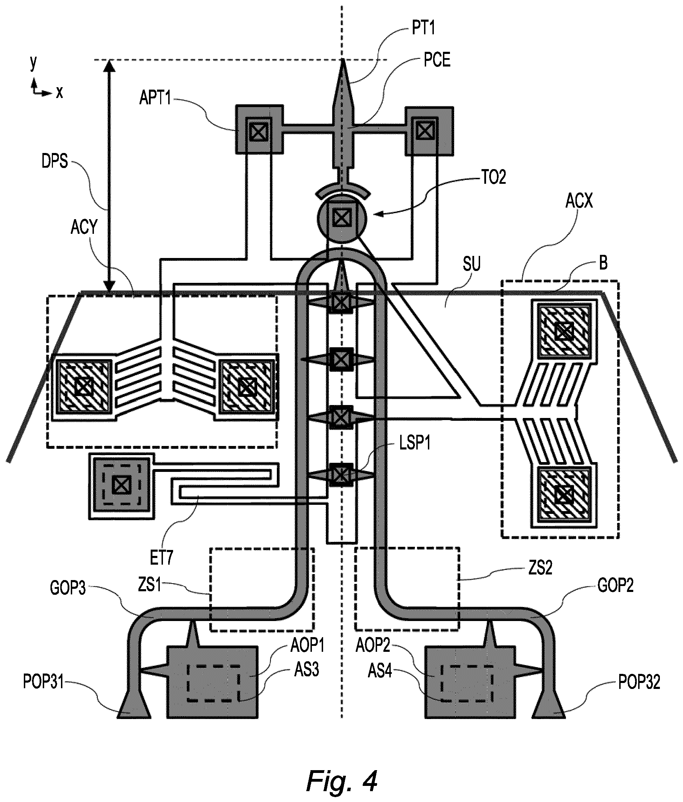

La figure 4 illustre une sonde selon un quatrième mode de réalisation de l'invention. Elle se différencie de celle de la figure 3 essentiellement en ce qu'elle comprend deux actionneurs thermiques ACY, ACX agissant selon des directions orthogonales. Ces actionneurs, thermiques, sont du type en chevron décrit plus haut. L'actionneur ACY est sensiblement identique à l'actionneur AC1' de la figure 3 et, comme ce dernier, induit un déplacement de la structure SMM2 dans la direction longitudinale y. L'actionneur ACX est tourné de 90° par rapport à ACY, de telle façon qu'il déplace la structure SMM2 dans la direction transversale x, permettant un balayage rapide d'une surface à étudier selon ladite direction transversale. Pour des raisons d'encombrement, seule une structure transversale en épingle ET7 est présente.

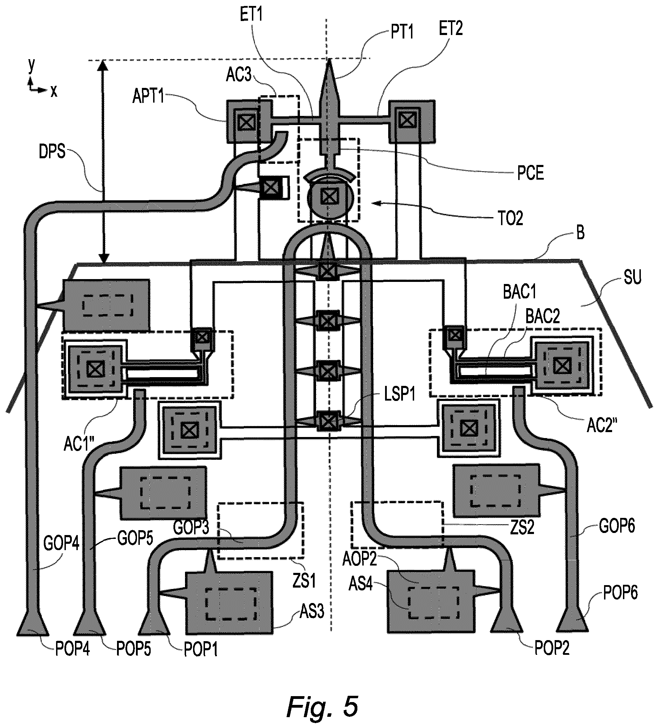

La figure 5 illustre une sonde selon un cinquième mode de réalisation de l'invention, présentant une navette « active », c'est-à-dire équipée d'un actionneur lui permettant de se déplacer de manière contrôlée, suivant la direction longitudinale y, par rapport à la structure de soutien SMM2. Cette dernière est également équipée d'actionneur lui permettant d'effectuer un déplacement longitudinal, comme dans les modes de réalisation des figures 2 et 3. Etant donné que la navette PCE présente une masse bien plus petite que la structure de soutien SMM2, son déplacement pourra s'effectuer à une fréquence sensiblement plus élevée. Ce mode de réalisation permet en particulier la mise en oeuvre d'une technique d'AFM résonante.

L'actionneur AC3 de la navette est du type thermo-optique : un guide d'onde planaire GOP4 transporte un rayonnement lumineux, injecté grâce à un port optique POP4, et le dirige vers l'un (ET1) des éléments transversaux qui maintiennent la navette ; l'échauffement induit par le rayonnement provoque une dilatation de l'élément, et donc sa flexion. Cet actionneur est particulièrement adapté pour exciter un mode de résonance de la structure, plutôt que pour un fonctionnement quasi-statique.

Les actionneurs AC1", AC2" de la structure SMM2 sont également de type thermo-optique. L'actionneur AC2" présente deux bras transversaux, un bras « chaud » BAC1 et un bras « froid » BAC2. Un guide d'onde planaire GOP6 transporte un rayonnement lumineux, injecté grâce à un port optique POP6, et le dirige vers le bras «chaud » BAC1, qui est chauffé et se dilate. L'actionneur AC1" présente un fonctionnement similaire (le guide d'onde associé à cet actionneur est désigné par la référence GOP5, et le port optique correspondant par POP5).

L'invention n'est pas limitée aux modes de réalisation qui viennent d'être décrits. Par exemple, d'autres types de transducteurs et d'actionneurs peuvent être utilisés. Les transducteurs peuvent ne pas être optiques, mais par exemple piézoélectriques ou électrostatiques (capacitifs) ; de même les actionneurs peuvent ne pas être thermiques mais, par exemple, piézoélectriques ou électrostatiques. Un actionnement bidirectionnel de la structure de soutien (cf. figure 4) peut être associé à un actionnement longitudinal de la navette (cf. figure 5) ; par ailleurs, la navette peut être actionnée alors que la structure de soutien est passive. La navette ne doit pas nécessairement se présenter sous la forme d'une simple poutre longitudinale ; elle peut présenter une structure plus complexe, par exemple en échelle. La pointe d'AFM peut éventuellement être rapportée. En outre, la sonde ne présente pas nécessairement de symétrie par rapport à un axe longitudinal.

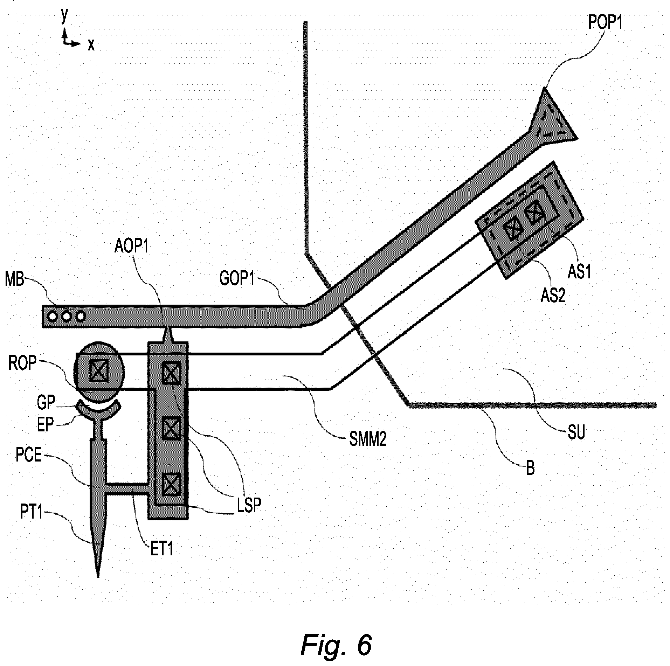

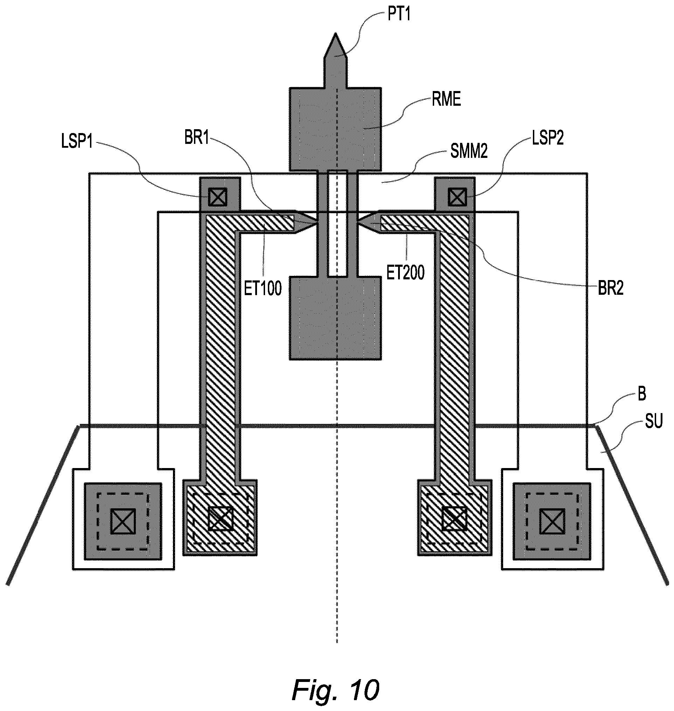

Les figures 6 à 10 montrent d'autres modes de réalisation de l'invention. Le mode de réalisation de la figure 10 n'est pas couvert par les revendications.

La figure 6 illustre un mode de réalisation dans lequel la structure de soutien SMM2 s'étend dans la direction latérale x à partir d'un coin du substrat SU. La partie sensible de la sonde, qui s'étend dans la direction longitudinale y, est semblable à celle du mode de réalisation des figures 3 à 5, sauf en ce qu'elle est maintenue par un seul élément transversal ET1. Son élément perturbateur EP vient influencer un résonateur optique ROP en forme de disque, porté par la structure de soutien et excité par un guide d'onde GOP1 s'étendant parallèlement à la structure de soutien et fonctionnant en réflexion grâce à un miroir à cristal photonique MB.

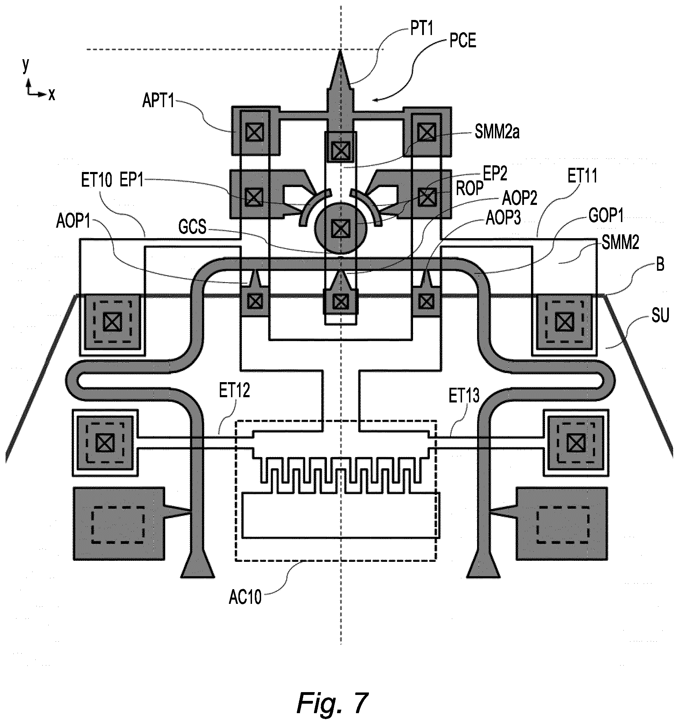

Dans le mode de réalisation de la figure 7, le résonateur optique en forme de disque ROP est mobile, porté par une portion « structurelle » SMM2a - réalisée à partir de la seconde couche - de la partie sensible (navette) PCE, et la détection de son mouvement est assurée grâce à deux éléments perturbateurs EP1, EP2 fixés à la structure de soutien. Ainsi, le circuit optique est optimal, la distance GCS entre le résonateur et le guide optique GOP1 étant constant.

Comme dans les modes de réalisation des figures 2 à 5, la structure de soutien peut se déplacer selon la direction longitudinale y grâce à un actionneur électrostatique interdigité AC10. Ce déplacement est autorisé par des éléments flexibles ET10, ET11, ET12, ET13 qui relient la structure de soutien mobile à des ancrages au substrat.

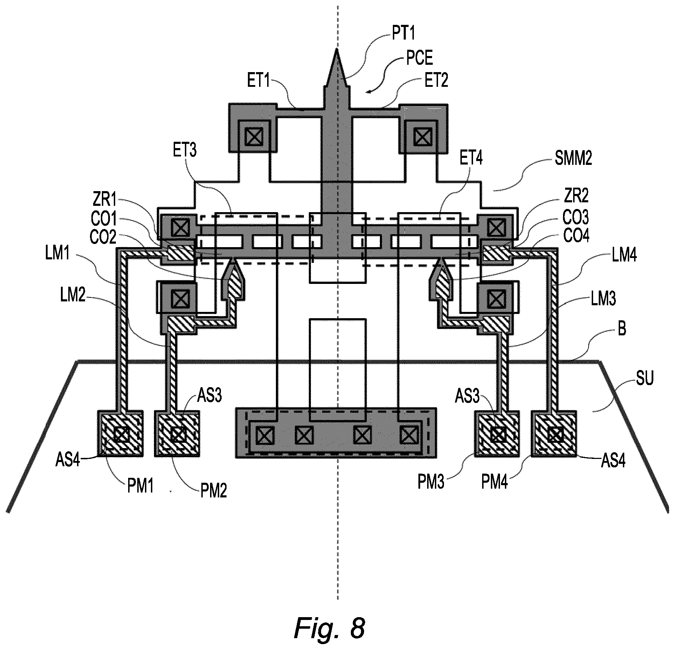

Dans le mode de réalisation de la figure 8, l'actionnement est électrothermique (le mouvement est induit par une dilatation provoquée par un échauffement induit par effet Joule, lorsqu'un courant électrique traverse ne zone résistive ZR1, obtenue par dopage de la première couche) et la détection piézorésistive (la déformation d'une zone résistive ZR2, également obtenue par dopage de la première couche, modifie sa résistance électrique). Les références LM1, LM2, LM3, LM4 désignent des lignes métalliques permettant l'actionnement (LM1, MM2) et la détection (LM3, LM4) ; les références CO1, CO2, CO3, CO4 des contacts ohmiques. ET3 et ET4 sont des éléments transversaux en forme de poutres composites (structures en échelle).

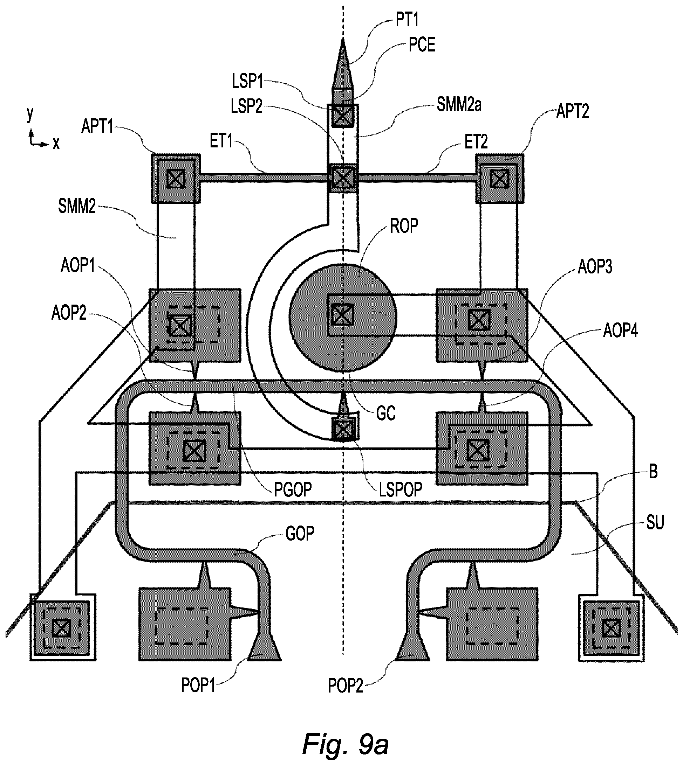

Dans le mode de réalisation de la figure 9a, la détection est assurée par un résonateur optique ROP en forme de disque, ancrée à la structure de soutien qui est constituée d'éléments en forme de poutre. La navette PCE est essentiellement constituée d'un élément SMM2a réalisé à partir de la seconde couche, à l'exception des éléments transversaux ET1, ET2 et de la pointe PT1. L'élément 2MM2a présente une partie en forme de croissant, ou de demi-cercle, qui contourne le disque ROP. La partie arrière de cet élément est reliée par une liaison verticale entre la couche structurelle et la couche de dispositif LSPOP à une portion suspendue PGOP d'un guide d'onde GOP. Ainsi, un mouvement de la navette PCE induit une flexion du guide d'onde, et donc une variation de l'intervalle GC entre ce dernier et le résonateur ROP. L'avantage de cette configuration est qu'en cas de déplacement important de la navette vers l'arrière (par exemple si la pointe PT1 touche un échantillon), le guide d'onde GOP ne risque pas d'entrer en contact avec le résonateur ROP.

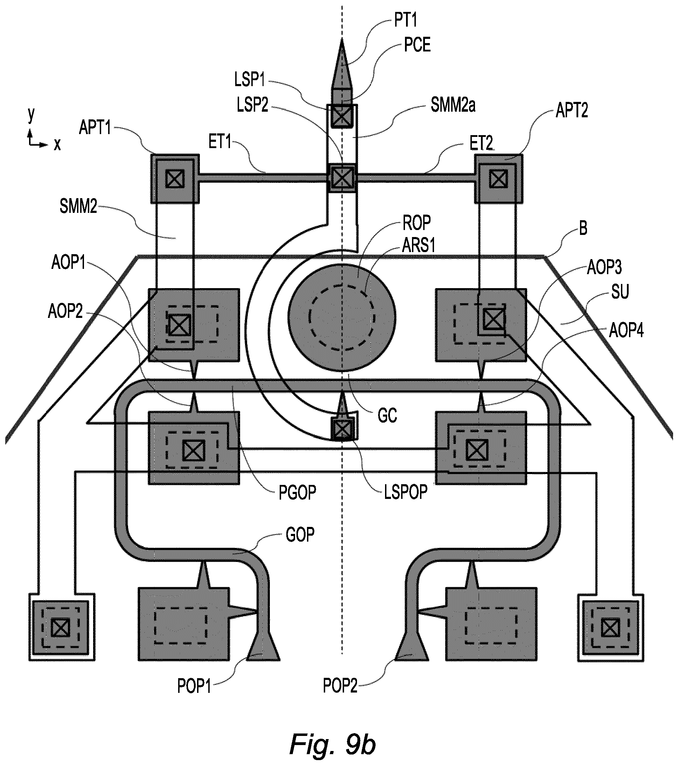

La figure 9b montre une variante de ce mode de réalisation, dans la quelle le bord B du substrat est plus avancé, et le résonateur ROP est directement ancré au substrat par un pilier en oxyde enterré ARS1.

Dans le mode de réalisation de la figure 10 qui n'est pas couvert par les revendications, la partie sensible de la sonde n'est pas une navette : en effet, elle est reliée à la structure de soutien par deux éléments transversaux ET100, ET200 rigides. Par contre, elle comprend un résonateur mécanique RME pouvant osciller selon un mode de vibration ayant une composante significative suivant y (un mode d'extension dans l'exemple de la figure). D'une manière générale ce résonateur peut être raccordé aux bras BR1 et BR2 à l'emplacement d'un noeud du mode de vibration. Le résonateur peut par exemple être choisi parmi un anneau, un disque, un polygone, une plaque.

Le passage d'un courant électrique dans les bras BR1, BR2 du résonateur provoque leur échauffement, et donc leur extension, ce qui permet d'exciter la vibration. Typiquement, le courant d'actionnement est à la fréquence f/2, f étant la fréquence de résonance du résonateur. La mesure du signal générée à la fréquence f permet la détection, par exemple par effet piézorésistif.

Particulièrement en microscopie à courbes de forces, il peut être avantageux de refroidir la sonde AFM. En effet, le bruit thermique limite la plus petite valeur de déplacement mesurable, et c'est effet est d'autant plus important que la raideur de la sonde est faible. Cependant, l'utilisation d'un refroidissement par des techniques cryogéniques conventionnelles n'est pas toujours possible, ou commode.

Or, il est connu qu'un élément micro- ou nano-mécanique placé à l'intérieur d'une cavité optique, formant l'un de ses miroir ou couplé à la cavité par onde évanescente subit différentes forces d'origine optique. Dans certaines conditions, ces forces peuvent induire un amortissement des vibrations de l'objet mécanique, et donc son refroidissement. Par exemple, l'article de G. Anetsberger, E. M. Weig, J. P. Kotthaus, et T. J. Kippenberg, « Cavity optomechanics and cooling nanomechanical oscillators using microresonator enhanced evanescent near-field coupling » Comptes Rendus Physique, vol. 12, pp. 800-816 décrit le refroidissement optique d'oscillateurs nano-mécaniques par couplage évanescent avec un résonateur optique en forme de disque.

Ces concepts sont transposables à l'invention pour ce qui concerne les modes de réalisation ou l'on utilise un résponateur optique pour mesurer le mouvement de la pointe (par exemple les modes de réalisation des figures 3 - 7, 9a et 9b).

En particulier il sera avantageux de réaliser une mesure de force de la façon suivante :
- préparer la structure mobile comportant la pointe dans un état de température effective inférieure à la température ambiante du microscope AFM en exploitant le principe de refroidissement optique ;
- utiliser un actionneur intégré ou externe pour approcher la pointe de la surface, puis la rétracter, tout en effectuant une mesure de force (traçage des courbes de force) ;
- mesurer en temps réel le déplacement de la pointe par une lecture optique tout en maintenant la température effective de la pointe la plus basse possible.

## Revendications

1. Sonde pour microscopie à force atomique comprenant une pointe pour microscopie à force atomique (PT1) portée par un substrat planaire (SU) présentant une surface principale, ladite pointe étant orientée dans une direction (y) dite longitudinale, parallèle à ladite surface principale, où:
- la pointe est portée par ou monolithique avec une navette (PCE) comprise dans une partie sensible de la sonde (SMS), mobile ou déformable, reliée à une structure de soutien (SMM2), qui est ancrée à la surface principale du substrat ;
- la partie sensible et la structure de soutien sont des éléments planaires, s'étendant principalement dans des plans parallèles à la surface principale du substrat ;
- la navette est reliée à la structure de soutien par l'intermédiaire d'au moins un élément (ET1 - ET4) permettant à ladite navette de se déplacer ou de s'étirer par rapport à la structure de soutien dans ladite direction longitudinale;
- la pointe, la partie sensible et la structure de soutien font saillie d'un bord (B) du substrat dans ladite direction longitudinale;
- la partie sensible de la sonde est formée, au moins en partie, par une portion d'une couche d'un premier matériau, dite première couche, séparée de la surface principale du substrat, et la structure de soutien est formée par une portion d'une couche d'un second matériau, dite seconde couche, plus épaisse que la première couche et agencée soit au-dessus de la première couche par rapport au substrat, soit entre la première couche et le substrat.

2. Sonde pour microscopie à force atomique selon la revendication 1 dans lequel :
- la partie sensible de la sonde est formée, au moins en partie, par une portion de ladite première couche, séparée de la surface principale du substrat ;
- au moins une autre portion de ladite première couche, dite portion d'ancrage (APS1, APS2), est solidaire de la surface principale du substrat ; et
- la structure de soutien, formée par une portion de ladite seconde couche, relie la partie sensible de la sonde à ladite portion d'ancrage de la première couche.

3. Sonde pour microscopie à force atomique selon la revendication 2 dans lequel la première couche est une couche de dispositif d'un substrat de type silicium sur isolant et la portion d'ancrage (APS1, APS2) est rendue solidaire de la surface principale du substrat par une couche d'oxyde enterré dudit substrat.

4. Sonde pour microscopie à force atomique selon l'une des revendications 2 ou 3 dans lequel ladite structure de soutien est en silicium polycristallin.

5. Sonde pour microscopie à force atomique selon l'une des revendications 2 à 4 dans lequel ladite partie sensible de la sonde comprend un élément (SMM2a) formé par une portion de ladite seconde couche.

6. Sonde pour microscopie à force atomique selon l'une des revendications précédentes dans lequel au moins un dit élément (ET1 - ET4) reliant la partie sensible de la sonde à la structure planaire de soutien est une poutre flexible, s'étendant dans une direction dite transversale (x), perpendiculaire à la direction longitudinale et parallèle à la surface principale du substrat, permettant à ladite partie sensible de se déplacer dans ladite direction longitudinale.

7. Sonde pour microscopie à force atomique selon la revendication 6 comprenant également un transducteur (TO1, TO2) configuré pour détecter un déplacement de la partie sensible de la sonde par rapport à la structure de soutien dans la direction longitudinale.

8. Sonde pour microscopie à force atomique selon la revendication 7 dans lequel ledit transducteur est de type optique.

9. Sonde pour microscopie à force atomique selon l'une des revendications 6 à 8 comprenant également un actionneur (AC3), dit premier actionneur, configuré pour provoquer un déplacement de la partie sensible de la sonde par rapport à la structure de soutien dans la direction longitudinale.

10. Sonde pour microscopie à force atomique selon la revendication 9 dans lequel ledit premier actionneur est de type thermique.

11. Sonde pour microscopie à force atomique selon l'une des revendications 1 à 5 dans lequel la partie sensible de la sonde comprend un résonateur micromécanique présentant un mode de vibration ayant une composant longitudinal, ainsi qu'au moins un actionneur adapté pour exciter ledit mode de vibration.

12. Sonde pour microscopie à force atomique selon l'une des revendications précédentes comprenant également un actionneur (AC1, AC2, ACY), dit deuxième actionneur, configuré pour provoquer un déplacement de la structure de soutien par rapport au substrat dans la direction longitudinale.

13. Sonde pour microscopie à force atomique selon la revendication 12 dans lequel ledit deuxième actionneur est de type thermique.

14. Sonde pour microscopie à force atomique selon l'une des revendications 1 à 6 comprenant également un transducteur optique (TO1, TO2) configuré pour détecter un déplacement de la partie sensible de la sonde par rapport à la structure de soutien dans la direction longitudinale et au moins un actionneur (AC1, AC2, ACY), dit second actionneur, configuré pour provoquer un déplacement de la structure de soutien par rapport au substrat dans la direction longitudinale, dans lequel ledit transducteur optique comprend au moins un guide d'onde planaire (GOP10, GOP20) présentant une première section solidaire du substrat, une deuxième section solidaire de la structure de soutien et, entre la première et la deuxième section, une section flexible (ZS1, ZS2) dans la direction longitudinale.

15. Sonde pour microscopie à force atomique selon l'une des revendications précédentes dans laquelle la partie sensible de la sonde présente une épaisseur inférieure ou égale à 500 nm et la structure de soutien présente une épaisseur supérieure ou égale à 1 µm.

16. Microscope à force atomique comprenant au moins une sonde selon l'une des revendications précédentes.

17. Microscope à force atomique selon la revendication 16, configuré pour opérer en modalité d'imagerie par courbes de force.

## Patentansprüche

1. Sonde für Rasterkraftmikroskopie die eine Spitze für Rasterkraftmikroskopie (PT1) umfasst, die von einem planaren Substrat (SU) mit einer Hauptoberfläche getragen wird, wobei die Spitze in einer sogenannten Längsrichtung (y) parallel zu der Hauptoberfläche ausgerichtet ist, wobei:
- die Spitze von einem Shuttle (PCE), das in einem empfindlichen Teil der Sonde (SMS) umfasst ist, der beweglich oder verformbar ist und mit einer Stützstruktur (SMM2) verbunden ist, die an der Hauptoberfläche des Substrats verankert ist, getragen wird oder monolithisch mit diesem ist;
- der empfindliche Teil und die Stützstruktur planare Elemente sind, die sich hauptsächlich in Ebenen parallel zur Hauptoberfläche des Substrats erstrecken;
- das Shuttle mit der Stützstruktur über mindestens ein Element (ET1 - ET4) verbunden ist, das es dem Shuttle ermöglicht, sich relativ zu der Stützstruktur in der Längsrichtung zu bewegen oder zu dehnen;
- die Spitze, der empfindliche Teil und die Stützstruktur von einer Kante (B) des Substrats in der Längsrichtung vorstehen;
- der empfindliche Teil der Sonde mindestens teilweise durch einen Abschnitt einer Schicht aus einem ersten Material, erste Schicht genannt, gebildet wird, die von der Hauptoberfläche des Substrats getrennt ist, und die Stützstruktur durch einen Abschnitt einer Schicht aus einem zweiten Material, zweite Schicht genannt, gebildet wird, die dicker als die erste Schicht ist und entweder über der ersten Schicht in Bezug auf das Substrat oder zwischen der ersten Schicht und dem Substrat angeordnet ist.

2. Sonde für Rasterkraftmikroskopie nach Anspruch 1, wobei:
- der empfindliche Teil der Sonde mindestens teilweise durch einen Abschnitt der ersten Schicht gebildet wird, der von der Hauptoberfläche des Substrats getrennt ist;
- mindestens ein weiterer Abschnitt der ersten Schicht, Verankerungsabschnitt (APS1, APS2) genannt, fest mit der Hauptoberfläche des Substrats verbunden ist; und
- die Stützstruktur, die durch einen Abschnitt der zweiten Schicht gebildet wird, den empfindlichen Teil der Sonde mit dem Verankerungsteil der ersten Schicht verbindet.

3. Sonde für Rasterkraftmikroskopie nach Anspruch 2, wobei die erste Schicht eine Vorrichtungsschicht aus einem Silizium-auf-Isolator-Substrat ist und der Verankerungsabschnitt (APS1, APS2) mit der Hauptoberfläche des Substrats durch eine vergrabene Oxidschicht des Substrats fest verbunden ist.

4. Sonde für Rasterkraftmikroskopie nach einem der Ansprüche 2 oder 3, wobei die Stützstruktur aus polykristallinem Silizium besteht.

5. Sonde für Rasterkraftmikroskopie nach einem der Ansprüche 2 bis 4, wobei der empfindliche Teil der Sonde ein Element (SMM2a) umfasst, das durch einen Abschnitt der zweiten Schicht gebildet ist.

6. Sonde für Rasterkraftmikroskopie nach einem der vorhergehenden Ansprüche, wobei mindestens ein Element (ET1 - ET4), das den empfindlichen Teil der Sonde mit der planaren Stützstruktur verbindet, ein flexibler Träger ist, der sich in einer sogenannten Querrichtung (x) erstreckt, die senkrecht zur Längsrichtung und parallel zur Hauptoberfläche des Substrats verläuft und es dem empfindlichen Abschnitt ermöglicht, sich in der Längsrichtung zu bewegen.

7. Sonde für Rasterkraftmikroskopie nach Anspruch 6, ferner umfassend einen Wandler (TO1, TO2), der konfiguriert ist, um eine Verschiebung des empfindlichen Teils der Sonde relativ zu der Stützstruktur in der Längsrichtung zu erfassen.

8. Sonde für Rasterkraftmikroskopie nach Anspruch 7, wobei der Wandler vom optischen Typ ist.

9. Sonde für Rasterkraftmikroskopie nach einem der Ansprüche 6 bis 8, die ferner ein Stellglied (AC3) umfasst, erstes Stellglied genannt, das konfiguriert ist, um eine Bewegung des empfindlichen Teils der Sonde relativ zu der Stützstruktur in der Längsrichtung zu bewirken.

10. Sonde für Rasterkraftmikroskopie nach Anspruch 9, wobei das erste Stellglied vom thermischen Typ ist.

11. Sonde für Rasterkraftmikroskopie nach einem der Ansprüche 1 bis 5, wobei der empfindliche Teil der Sonde einen mikromechanischen Resonator, der einen Vibrationsmodus mit einer Längskomponente aufweist, sowie mindestens ein Stellglied, das zum Anregen des Vibrationsmodus ausgelegt ist, umfasst.

12. Sonde für Rasterkraftmikroskopie nach einem der vorhergehenden Ansprüche, die ferner ein Stellglied (AC1, AC2, ACY) umfasst, zweites Stellglied genannt, das konfiguriert ist, um eine Bewegung der Stützstruktur relativ zu dem Substrat in der Längsrichtung zu bewirken.

13. Sonde für Rasterkraftmikroskopie nach Anspruch 12, wobei das zweite Stellglied vom thermischen Typ ist.

14. Sonde für Rasterkraftmikroskopie nach einem der Ansprüche 1 bis 6, ferner umfassend einen optischen Wandler (TO1, TO2), der konfiguriert ist, um eine Verschiebung des empfindlichen Teils der Sonde relativ zu der Stützstruktur in der Längsrichtung zu erfassen, und mindestens ein Stellglied (AC1, AC2, ACY), zweites Stellglied genannt, das konfiguriert ist, um eine Verschiebung der Stützstruktur relativ zu dem Substrat in der Längsrichtung zu bewirken, wobei der optische Wandler mindestens einen planaren Wellenleiter (GOP10, GOP20) umfasst, der einen ersten Bereich, der fest mit dem Substrat verbunden ist, einen zweiten Bereich, der fest mit der Stützstruktur verbunden ist, und zwischen dem ersten und dem zweiten Bereich einen flexiblen Bereich (ZS1, ZS2) in der Längsrichtung aufweist.

15. Sonde für Rasterkraftmikroskopie nach einem der vorhergehenden Ansprüche, wobei der empfindliche Teil der Sonde eine Dicke von 500 nm oder weniger und die Stützstruktur eine Dicke von 1 µm oder mehr aufweist.

16. Rasterkraftmikroskop, mindestens eine Sonde nach einem der vorhergehenden Ansprüche umfassend.

17. Rasterkraftmikroskop nach Anspruch 16, das zum Betrieb in Kraftkurven-Bildgebungsmodalität konfiguriert ist.

## Claims

1. A probe for atomic force microscopy comprising a tip for atomic force microscopy (PT1) borne by a planar substrate (SU) having a main surface, said tip being oriented in a so-called longitudinal direction (y), parallel to said main surface, wherein:
- the tip is borne by or monolithic with a shuttle (PCE) comprised in a sensitive part of the probe (SMS), which is movable or deformable and linked to a support structure (SMM2), which is anchored to the main surface of the substrate;
- the sensitive part and the support structure are planar elements, extending mainly in planes that are parallel to the main surface of the substrate;
- the shuttle is linked to the support structure via at least one element (ET1 - ET4) allowing said shuttle to move or to extend with respect to the support structure in said longitudinal direction;
- the tip, the sensitive part and the support structure protrude from an edge (B) of the substrate in said longitudinal direction;
- the sensitive part of the probe is at least partly formed by a portion of a layer of a first material, referred to as the first layer, separated from the main surface of the substrate, and the support structure is formed by a portion of a layer of a second material, referred to as the second layer, that is thicker than the first layer and arranged either above the first layer with respect to the substrate or between the first layer and the substrate.

2. The probe for atomic force microscopy according to claim 1, wherein:
- the sensitive part of the probe is at least partly formed by a portion of said first layer, separated from the main surface of the substrate;
- at least one other portion of said first layer, referred to as the anchoring portion (APS1, APS2) is integral with the main surface of the substrate; and
- the support structure, formed by a portion of said second layer, links the sensitive part of the probe to said anchoring portion of the first layer.

3. The probe for atomic force microscopy according to claim 2, wherein the first layer is a device layer of a silicon-on-insulator substrate and the anchoring portion (APS1, APS2) is rendered integral with the main surface of the substrate by a buried oxide layer of said substrate.

4. The probe for atomic force microscopy according to one of claims 2 or 3, wherein said support structure is made of polycrystalline silicon.

5. The probe for atomic force microscopy according to one of claims 2 to 4, wherein said sensitive part of the probe comprises an element (SMM2a) formed by a portion of said second layer.

6. The probe for atomic force microscopy according to one of the preceding claims, wherein at least one said element (ET1 - ET4) linking the sensitive part of the probe to the planar support structure is a flexible beam, extending in a so-called transverse direction (x), perpendicular to the longitudinal direction and parallel to the main surface of the substrate, allowing said sensitive part to move in said longitudinal direction.

7. The probe for atomic force microscopy according to claim 6, also comprising a transducer (TO1, TO2) configured to detect a displacement of the sensitive part of the probe with respect to the support structure in the longitudinal direction.

8. The probe for atomic force microscopy according to claim 7, wherein said transducer is an optical transducer.

9. The probe for atomic force microscopy according to one of claims 6 to 8, also comprising an actuator (AC3), referred to as the first actuator, configured to cause a displacement of the sensitive part of the probe with respect to the support structure in the longitudinal direction.

10. The probe for atomic force microscopy according to claim 9, wherein said first actuator is a thermal actuator.

11. The probe for atomic force microscopy according to one of claims 1 to 5, wherein the sensitive part of the probe comprises a micromechanical resonator having a vibration mode exhibiting a longitudinal component, as well as at least one actuator suitable for exciting said vibration mode.

12. The probe for atomic force microscopy according to one of the preceding claims, also comprising an actuator (AC1, AC2, ACY), referred to as the second actuator, configured to cause a displacement of the support structure with respect to the substrate in the longitudinal direction.

13. The probe for atomic force microscopy according to claim 12, wherein said second actuator is a thermal actuator.

14. The probe for atomic force microscopy according to one of claims 1 to 6, also comprising an optical transducer (TO1, TO2) configured to detect a displacement of the sensitive part of the probe with respect to the support structure in the longitudinal direction and at least one actuator (AC1, AC2, ACY), referred to as the second actuator, configured to cause a displacement of the support structure with respect to the substrate in the longitudinal direction, wherein said optical transducer comprises at least one planar waveguide (GOP10, GOP20) having a first section that is integral with the substrate, a second section that is integral with the support structure and, between the first and the second sections, a section (ZS1, ZS2) that is flexible in the longitudinal direction.

15. The probe for atomic force microscopy according to one of the preceding claims, wherein the thickness of the sensitive part of the probe is less than or equal to 500 nm and the thickness of the support structure is more than or equal to 1 µm.

16. An atomic force microscope comprising at least one probe according to one of the preceding claims.

17. The atomic force microscope according to claim 16, configured to operate in force curve imaging mode.
